Europäisches Patentamt

European Patent Office

Office européen des brevets

(11) Publication number: **0 571 683 A1**

# EUROPEAN PATENT APPLICATION

(21) Application number: **92480074.1**

(22) Date of filing: **26.05.92**

(51) Int. Cl.5: **G06F 5/00, G06F 12/04**

(43) Date of publication of application:
**01.12.93 Bulletin 93/48**

(84) Designated Contracting States:
**DE FR GB**

(71) Applicant: **International Business Machines Corporation**
**Old Orchard Road**
**Armonk, N.Y. 10504(US)**

(72) Inventor: **Aldebert, Jean-Paul**
**82, avenue Colonel Meyere**
**F-06140 Vence(FR)**
Inventor: **Calvignac, Jean**
**187 Chemin les Vallières**
**F-06610 La Gaude(FR)**

Inventor: **Lips, Jean-Pierre**
**Le Park villa No 8,**
**73 Chemin des Collettes**
**F-06800 Cagnes-Sur-Mer(FR)**
Inventor: **Naudin, Bernard**
**Les Provençales No 10,**
**Corniche d'Agrimont**
**F-06700 Saint Laurent du Var(FR)**
Inventor: **Orsatti, Daniel**
**11 Allée des Bouleaux**
**F-06800 Cagnes-Sur-Mer(FR)**

(74) Representative: **Lattard, Nicole**
**Compagnie IBM France**
**Département de Propriété Intellectuelle**
**F-06610 La Gaude (FR)**

(54) **High performance data re-alignment mechanism with multiple buffers in a memory access control device.**

(57) The data re-alignment method and device to be used in the transmission of data from a plurality of source buffers (113) of the shared memory to a flip-flop target buffers (117) before they are transferred to different users that share the memory, each source buffer being organized in $2^n$ byte words and the target buffer being organized in $2^m$ byte words, where m is greater than n.

To perform a memory read operation, the data read from different source buffers are transferred to a Buffer Interface Register (122) for the re-alignment to match the size of the bytes word of the target buffer. Therefore, after successive reading from the source buffer to write the data into the BIR, the BIR which houses $(2^m + 2^n - 1)$ bytes may loop back the exceeding bytes which are from position $(2^m + 1)$ to $(2^m + 2^n - 1)$ to which are added the next $2^n$ bytes read from the source buffer while the first $2^m$ bytes are transferred to the target buffer (117). The mechanism enables to avoid useless steps during the reading, the writing and the transfer.

A pointer management system is adapted to the method and the device of the present invention in order to manage the data byte content of each word of the source buffers by indicating its beginning and its ending, and to manage the BIR to enable to loop the exceeding bytes to the first position of the BIR to which are added the next bytes from the source buffer, while the first eight bytes are transferred to the target buffer (117).

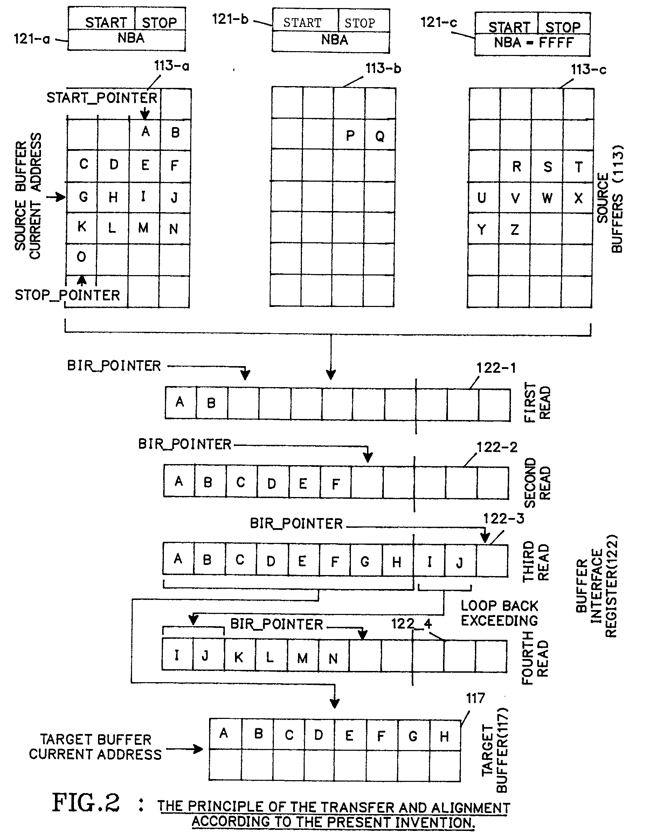

FIG.2 : THE PRINCIPLE OF THE TRANSFER AND ALIGNMENT
ACCORDING TO THE PRESENT INVENTION.

2

Field of the invention

This invention relates to a mechanism and a method for transmitting messages from a depository storage to different users, and more particularly to a mechanism and a method which enable to transfer and to align data from a message split in different source buffers to a common target buffer.

Background of the invention

The telecommunication world is based on devices which enable the management of information or messages in a performing way. The information or the messages are stored in a main depository storage whose access must be controlled and respect a method which is to be adapted to the environment for which the devices are supposed to be used.

The communication controllers are devised with a main depository storage shared by different users. When the number of users increases, the shared memory must have a large capacity, and the mechanism of its access becomes therefore more complex. By keeping the same structure of the shared memory, one may optimize the access to that primary memory thanks to the improvement of the methods and devices. But those optimizations are still desirable.

The IBM Technical Disclosure Bulletin, Vol.24 n° 11B April 82 page 5948, discloses an odd-byte data alignment mechanism for system I/O. The device, implemented in that data processing system architecture, enables to byte-align data on odd memory boundaries, prior to transferring data to or accepting it from a multibyte bus. The purpose of this disclosure is limited to the case of odd memory boundaries.

The EP application A1 206 083 describes a method and apparatus for interfacing busses of different sizes in an environment which is completely different from the one implemented in the present invention. Moreover, that implementation does not enable to transfer and to align data before transferring them in a bus of different size.

The IBM Technical Disclosure Bulletin, vol.29 n°2 July 86, discloses a hardware-assisted byte alignment for high-speed digital communication processors. The technique described enables the processor to move data stored at even/odd locations to odd/even locations. Therefore, this technique cannot be implemented in a general case where the data are stored in different ways and they need to be aligned to be transferred in a bus of different size.

None of these inventions deals with the problems that occur when the shared memory is organized into a plurality of source buffers whose size is different from the one of the target buffer. The low performance is principally affected by the fact that the source buffers are read twice before the data are transferred to the target buffer. The performance of the reading of the data in the shared memory, its alignment and its transfer depend on the apparatus which is implemented and the method to be adapted.

Summary of the present invention

The main object of the present invention is to provide a method and an apparatus to align data of a message read from a plurality of source buffers and to transfer them to a unique target buffer.

Another object of the invention is to provide such an apparatus comprising an intermediate buffer which is a buffer interface register with an extension whose size depends on the source and target buffers.

Another object is to connect to the buffer interface register a plurality of multiplexers which enable not to read twice the data stored in the source buffers.

Another further object is to provide a pointer system management in the apparatus to control the multiplexers, the buffer interface registers and the target buffer.

Yet another further object is to provide a method to be adapted to the apparatus which avoid useless steps and increases the performance in the step of reading the data in the source buffers, the step of its alignment in the buffer interface register and the step of its transfer to the target buffer.

All these objects are achieved by the features of claims 1 and 3.

Brief description of the drawings

Figure 1 shows the environment of the mechanism and method according to the present invention.

Figure 2 shows the principle of the data transfer and alignment from different source buffers to a unique target buffer according to the present invention.

Figure 3 shows the flow-chart of the beginning of the data processing method.

Figures 4-A and 4-B which have to be assembled as shown in figure 4 represent the main flow-chart of the data processing.

Figure 5 shows the flow-chart of the data processing when the mechanism runs out of conditions.

Figure 6 shows the implementation of the mechanism in the chips according to the present invention.

Figure 7 represents the detailed implementation of the mechanism in the BIR (Buffer Interface Register).

Detailed description of the invention

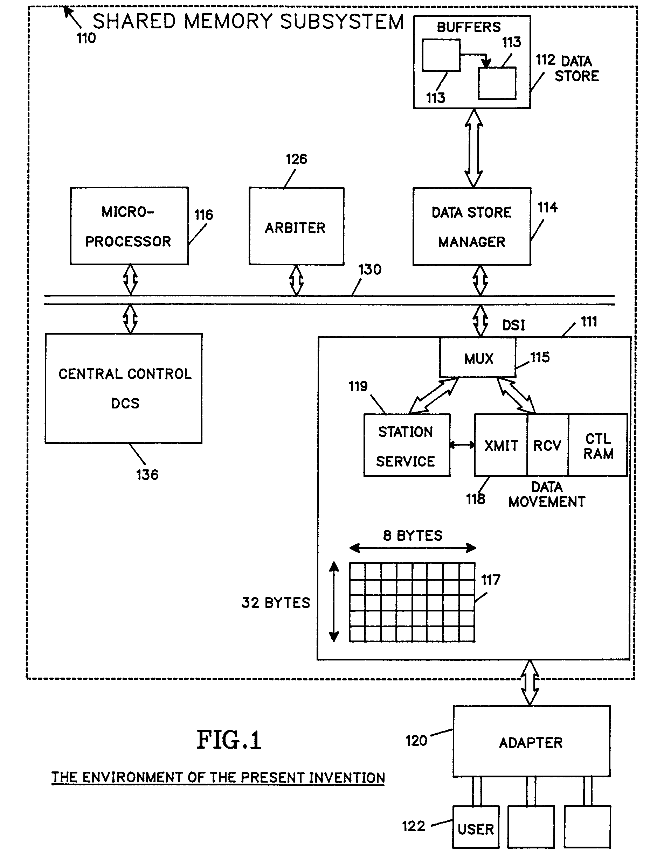

Figure 1 represents the block diagram of a communication system in which the method and apparatus according to the present invention are incorporated. It schematically shows the environment of the implementation.

Box (110) shows a shared memory subsystem which houses five principle parts:
- a microprocessor (116) for processing the data messages and controlling the shared memory subsystem (110) and the adapters (122);
- a centralized control system (136);
- an arbiter (126);
- a data store manager (114) associated with a data store (112) for keeping data messages coming from the adapters or prepared for going to the adapters in different chained buffers (113); and
- a data store interface DSI (111) also described in details in the EP application A 365 731.

The different parts of the shared memory subsystem (110) are connected to each other by a bus of four bytes (130) which is controlled by the arbiter (126). The data store interface is connected to a plurality of users (122) which share the data store (112) by another type of bus which enables a high performance bus of two or four bytes.

In the present invention, we will focus more in detail on the memory access control device between the two entities which are the data store interface (111) and the data store (112) through the data store manager (114).

The data store (112) essentially holds information organized in two different ways: the messages received from or to be transmitted to the users (122) through the data store manager (114), the data store interface (111) and the adapter (120).

A data store interface which can be used with the mechanism of the present invention is described more in details in the EP application A 365 731. Such data store interface comprises a mechanism through which devices (communication adapters) interface the data store. This system is a set of hardware means which perform preemptive data movements with the shared memory under request of the attached adapters (120) without requiring complete message buffering in the adapters.

According to the present invention, the interface (111) comprises a data movement (118) split into two sections Receive and Transmit. The receive section performs the assembling of the data messages received by the users (122) attached to the adapter (120), their chaining and enqueueing into the LIQ queues (refer to EP application A 365 731). The transmit section performs the disassembling of the data messages dequeued from the LOQ (link outbound queue) from the data store and the assembling in a target buffer (117) whose size is predetermined, of corresponding data burst to be transmitted to the destination users.

Both transmit and receive data movements save in the data movement control RAM (118) the state of each user in order to restart its processing after an interruption which was necessary to process the burst of another user.

The interface (111) also comprises a station service (119) which cooperates with the data movement (118) and interfaces with the central control (136).

Figure 2 shows the principle of the data transfer and alignment coming from different source buffers (113) in the data store to a target buffer (117) in the data store interface, where the target buffer may be represented by a flip-flop buffers.

According to the implementation in the present invention, the data store (112) is composed of a plurality of source buffers (113) which are chained to each other in order to contain the data of a message (buffer chaining). Those source buffers have the same predetermined size. Each word which composes the buffers, has four bytes. The buffers are read word by word according to the address of the start pointer and the stop pointer indicated in the buffer control block (121) stored in the data store and attached to each source buffer. The start pointer indicates the first not empty byte in the corresponding source buffer, and the stop pointer indicates the last not empty byte. The buffer control block also contains a field which indicates the address of the next buffer which is chained to the present buffer.

4

Each time the users request the data from the shared memory, they have to indicate the maximum number of bytes that they expect. However that number should not exceed 8*32 bytes which correspond to the number of bytes that the target buffer (117) may have. The size of the target buffer is predetermined. Each word which composes the target buffer has eight bytes.

Before the data are transferred to the target buffer they transit through the buffer interface register (BIR) (122) after successive reads in order not to leave empty bytes in the messages. The BIR is implemented between source and target buffer and it is associated with a logic program to manage pointers. The pointers system is managed by several rules. The implementation of the BIR is fundamental for the method and the apparatus of the present invention because it enables to align data without any empty byte and overall with only few reads of the source buffers, which will therefore improve the memory access time. The BIR has a number of bytes = target buffer width + (source buffer width -1). That size of the BIR is chosen in order to loop back exceeding read without having to reread the data once again from the source buffers.

Let's take the example given in the figure 2 to illustrate the mechanism of the data alignment and its transfer to the users.

A user has requested a data message from the shared memory with the expected number of bytes. Therefore the register of the first source buffer will indicate the start pointer which points to the beginning of the message to transmit.

The data read from the source buffer are transferred to the BIR until the first eight bytes of the BIR are filled or until the end of the requested message is reached or until the target buffer is filled. The BIR pointer always indicates the position of the first byte to fill.

In the present example, after the third read, the first ten bytes of the BIR are filled. Then in the next machine cycle the first eight bytes are therefore written in the target buffer (117) according to the target buffer current address, and the two exceeding bytes are looped back in the position of the two first bytes of the BIR to which are added to the last four bytes of the word read from the source buffer.

This example shows that the data of the source buffer do not need to be re-read thanks to the extension of the last three bytes of the BIR. The number of bytes extended depends on the number of bytes of the source buffer.

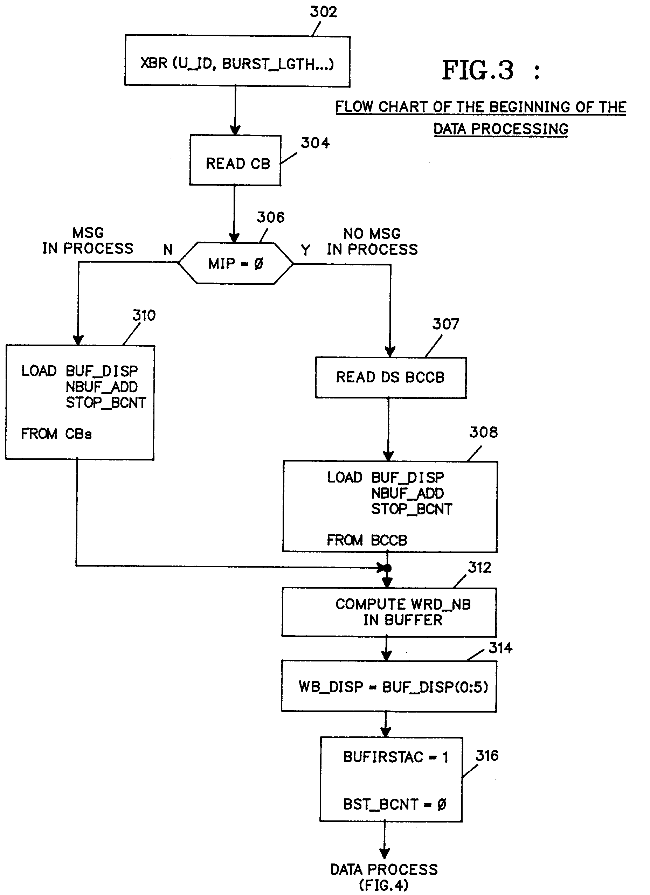

Figure 3 represents the flow-chart of the beginning of the data re-alignment processing.

When the adapter is aware thanks to the station service (119) that he has a message to transmit to a user, he sends a transmit burst request (XBR) to the data movement (DM) (118) in the DSI at step 302. The XBR indicates the user-id and the burst length which should be a multiple of 8 bytes. The DM reads at step 304 the control block (CB) in the data movement control RAM to locate the source buffer(s) which correspond to the user that has sent the request (refer to EP application A 365 731 which describes more in detail the DSI and the DM). At step 306, it checks if a message is in process for that user.

In case no message is in process for that user, a new message in the buffer address (BUFF__ADD) will be processed. At step 307, the DM will read the buffer chaining control block (BCCB) corresponding to the user in the data store to load at step 308 the BUF__DISP, the NBUF__ADD and the STOP__BCNT in its own control block CBs.

Otherwise, at step 310, the data movement will load from the control block:
- the buffer displacement (BUF__DISP) to give the address of the next byte to read and to transfer;
- the next buffer address (NBUF__ADD);
- the stop byte count (STOP__BCNT).

At step 312, the data movement computes the word number (WRD__NB) in the source buffer to know the number of word (or the number of reading) to transmit to the user. Then at step 314, the working buffer displacement is updated WB__DISP = BUF__DISP (0:5) to build the address of the word in the data store by considering the first six bits of the BUF__DISP.

At step 316, the buffer first access (BUFIRSTAC) is set to 1 to indicate that the corresponding source buffer is read for the first time for the same XBR sent by the adapter, and the burst bytes count (BST__BCNT) which indicates the number of bytes that are read is reset. Both registers are managed and located inside the data movement transmit.

Afterwards, the data process may start, which will be described later on.

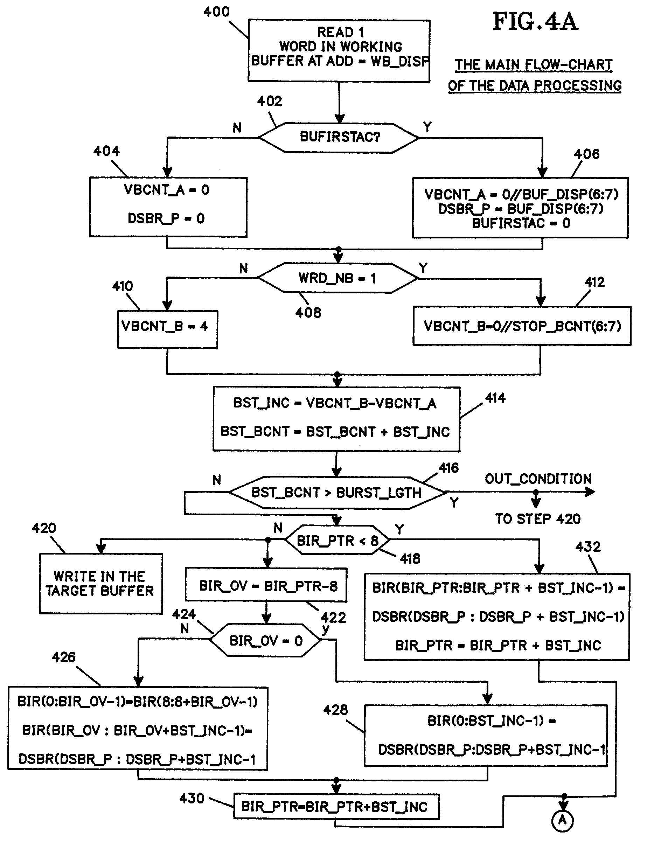

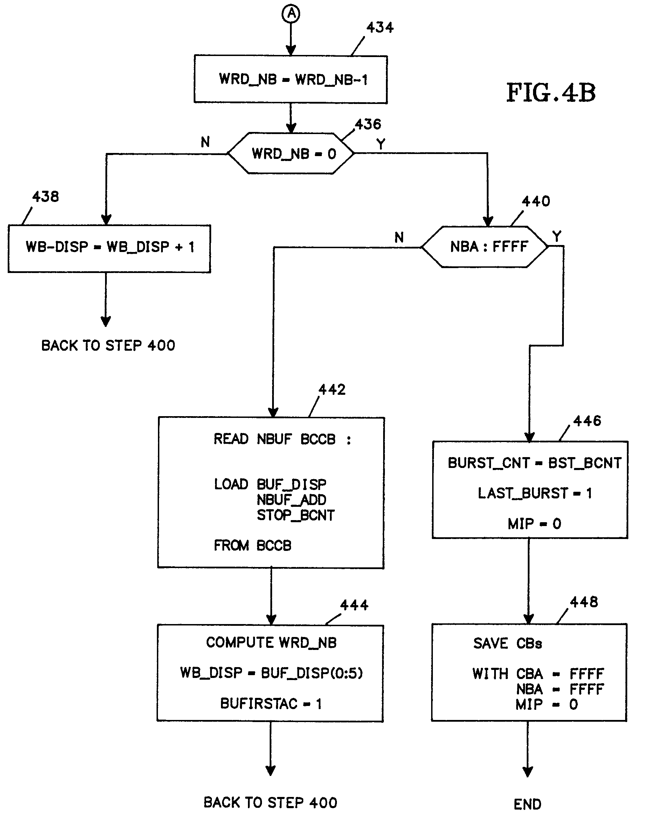

Figures 4-A and 4-B show the flow-chart of the data processing of the data movement.

In figure 4-A, the DM reads the first word of four bytes of the source buffer in the data store at the address of the working buffer WB__DISP at step 400. At step 402, the DM checks if it is a first access in that buffer.

If it is a buffer first access BUFIRSTAC = 1, at step 406, the register valid byte count composed of three bits which indicates the beginning of the current word to be read in the source buffer VBCNT__A is set to the concatenation of 0 and BUF__DISP(6:7) which corresponds to a number comprised between 0 and 3. In the same way the data store burst register DSBR__P is set equal to the BUF__DISP(6:7) because the first word read may start at the second, the third or the fourth byte position.

Otherwise, at step 404, the DSBR__P is set equal to 0 as well as the register valid byte count VBCNT__A composed of three bits which indicate the position of the first byte in the current word of the source buffer, and in this case the word necessarily starts at the beginning because it is not a first access in that source buffer.

At step 408, the DM also checks if WRD__NB = 1 which means that it is the last word in the source buffer. If so, at step 412, the valid byte count which indicates the end of the word VBCNT__B is set equal to the concatenation of 0 and STOP__BCNT(6:7). Otherwise, the VBCNT__B composed of three bits is set equal to 4 at step 410.

At step 414, the burst increment which indicates the number of bytes read during that reading BST__INC is set equal to VBCNT__B -VBCNT__A. The the burst byte count which indicates the number of bytes read since the beginning of the operation BST__BCNT is set equal to BST__BCNT + BST__INC. And at step 416, the BST__BCNT is compared to the BURST__LGTH. If the BST__BCNT > BURST__LGTH, then the mechanism runs out of conditions, which will be described more in detail and the BIR content is transferred to fill the target buffer as step 420.

Otherwise, at step 418, the DM checks which byte (from 0 to 10) the buffer interface register pointer points. If the first eight bytes are filled, the data movement write the first eight bytes in the target buffer (117) at step 420. At the same time, the DM computes the BIR__OV = BIR__PTR - 8 which corresponds to the exceeding number of bytes, at step 422.

At step 424, two cases may appear, therefore the DM verifies if BIR__OV = 0. In case the BIR has exactly 8 bytes, the DM writes in the BIR all the data read in the source buffer at step 428. Otherwise, the DM writes in the BIR the data read in the source buffer by taking into account the bytes that are left in the BIR__OV. And at step 430, the DM computes the BIR__PTR which indicates the position in the BIR of the byte read from the source buffer.

Referring back to the step 418, if the first eight bytes are not filled, the PM writes the data read from the source buffer in the BIR and the BIR__PTR will also point to the next position in the BIR, at step 432.

This data processing continues in the figure 4-B. At step 434, the DM decrements the word number WRD__NB in its own register. At step 436, it has to check if the WRD__NB is equal to 0 which means that it was the last data reading. If it is not the case, the DM increments the WB__DISP at step 438 and the process loops back to step 400.

Otherwise, the DM verifies if it is the end of the message (NBA = FFFF) at step 440. If there are still some data in the next source buffer, the DM will read, at step 442, the register (121) of the said next source buffer, and it loads the BUF__DISP, NDUF__ADD and STOP__BCNT from the buffer chaining control block BCCB. At step 444, the DM computes the WRD__NB to know the number of reading of the source buffer, the buffer displacement is saved in the word displacement WB__DISP = BUF__DISP and the BUFIRSTAC = 1. Afterwards, the process loops back to the step 400.

In case it is the end of the message, at step 446, the DM saves in the register burst count BURST__CNT the BST__BCNT computed at step 414 to give it to the adapter attached to the user to which is sent the message. At step 448, the DM resets in the control block CB, the current buffer address CBA = FFFF, the next buffer address NBA = FFFF, and the message in process MIP = 0.

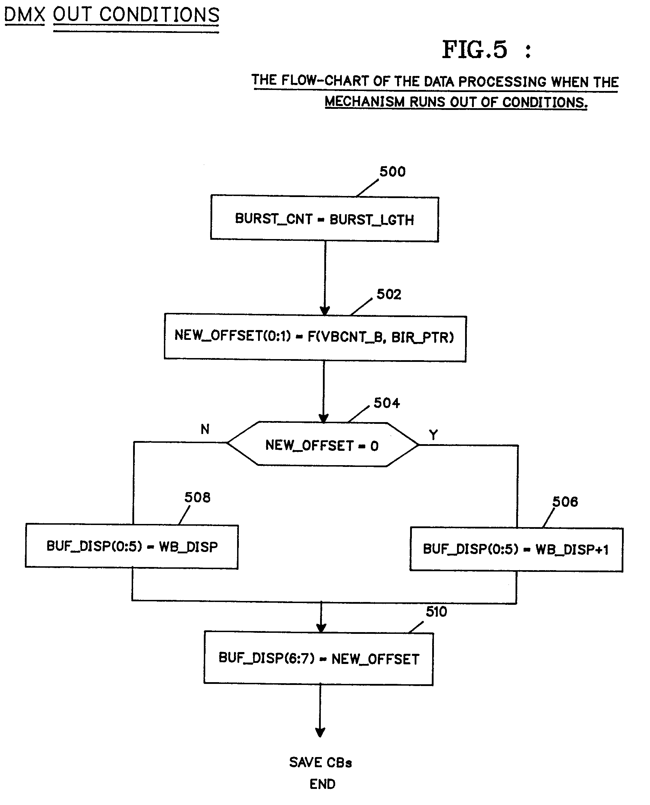

Figure 5 shows the case the data processing mechanism runs out of conditions when the BST__BCNT > BURST__LGTH. In this case, the DM should take into account only the bytes that can be transferred to the target buffer and save, in the variable "source buffer displacement", the position of the first byte of the word read that will not be transferred to the target buffer.

At step 500, the DM sets the burst count BURST__CNT equal to BURST__LGTH, the BURST__CNT indicates the number of bytes that the adapter will receive for that burst. At step 502, the DM computes the values of both bytes of NEW__OFFSET (0:1) according to the function which depends on the VBCNT__B and the BIR__PTR. That function is described in detail as follows:

| VBCNT_B (0:1) \ BIR_PRT (0:1) | 00 | 01 | 10 | 11 |
|---|---|---|---|---|
| 00 | 00 | 11 | 10 | 01 |
| 11 | 00 | 10 | 01 | N.A. |
| 10 | 00 | 01 | N.A. | N.A. |
| 01 | 00 | N.A. | N.A. | N.A. |

* If the valid byte count VBCNT_B is equal to 00 which means that the fourth byte of the source buffer has been read and transferred to the BIR, four situations may occur:
- if the BIR_PTR is equal to 00, which means that it points to the eighth byte (the first eight bytes being filled), then the new_offset is set equal to 00,
- if the BIR_PTR is equal to 01, then the new_offset is set equal to 11 to indicate that the last three bytes cannot be transferred to the target buffer like the first eight bytes of the BIR,
- if the BIR_PTR is equal to 10, then the new_offset is set equal to 10 to indicate that the last two bytes cannot be transferred to the target buffer,
- if the BIR_PTR is equal to 11, then the new_offset is set equal to 01 and only the last byte cannot be transferred to the, target buffer;

* In the same way when the VBCNT_B is equal to 11 which means that the third byte of the source buffer has been read and transferred to the BIR, three situations may occur:
- if the BIR_PTR is equal to 00 or 01 or 10, then the new_offset is respectively set equal to 00, 10 or 01,
- and the case the BIR_PTR is equal to 11 cannot occur because it means that the first eight bytes of the BIR which has already been filled have not been transferred to the target buffer, yet;

* The same mechanism is applied to the cases the VBCNT_B is equal to 10 and 01 (see the array shown above).

Once the value of the new_offset is computed the processing of the further steps of the flow-chart of figure 5 may be operated.

At step 504, the DM tests if the NEW_OFFSET = 0 which means that all the bytes read from the source buffer can be transferred to the target buffer. Therefore if it is so the BUF_DISP(0:5) is set equal to WB_DISP + 1 at step 506. Otherwise, BUF_DISP(0:5) = WB_DISP at step 508.

At step 510, the NEW_OFFSET is saved in the BUF_DISP(6:7), and it will be loaded in the CBs.

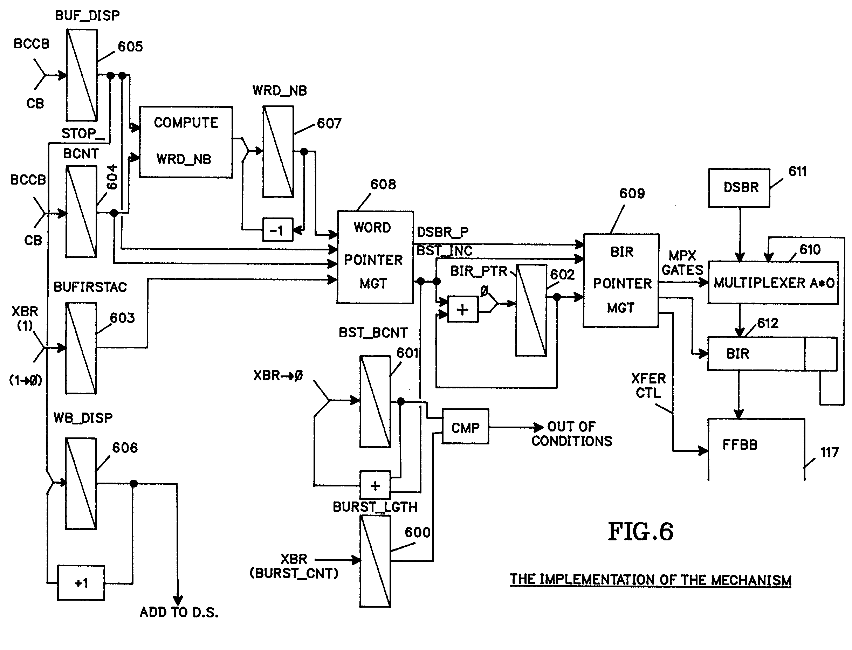

Figure 6 shows the implementation of the mechanism according to the present invention.

There are three phases: the initialisation of the registers, the preliminary process and finally the data processing.
- The initialization phase starts once an adapter has sent to the DM a XBR with the information of the userid and the burst length to be stored in the register BURST_LGTH (600). The registers BST_CNT (601) and the BIR_PTR (602) are reset at the same time, and the register BUFIRSTAC (603) is set to 1. The register STOP_BCNT (604) is also loaded thanks to the BCCB of the buffer in the data store if it is a first burst or a new buffer. And if it is an intermediate buffer, it is loaded from the control block in the DM.

In the same way, the register BUF_DISP (605) is loaded from the BCCB or from the Control Block. The most significant bits which correspond to the five first bits are loaded in the WB_DISP (606) which enables to select the word in the buffer.
- The preliminary process consists in computing the number of word to read in the buffer thanks to the register BUF_DISP and the STOP_BCNT, and loading the result in the register WRD_NB (607). Then this register will be decremented each time a data word is read from the data store as well as

7

WB__DISP will be incremented.

- The data processing comprises four principal steps:

Step 1. The word pointer management (608) works with the data from the registers BUF__DISP, STOP__BCNT, BUFIRSTAC and WRD__NB, it computes the values of the pointer DSBR__P and the BST__INC after each reading of a word in the data store.

Step 2. The register BST__INC corresponding to the number of significant bytes is added to the value of the register BST__CNT, and the value of this addition is compared to the BURST__LGTH to check if it is out of conditions (refer to figure 5).

Step 3. At the same time, the significant bytes which are read are written in the BIR registers (612) thanks to the multiplexer A*O (610) which are pointed by the pointer DSBR and the gates computed from the BIR pointer management (609). All those operations are done as follows:

a) Writing of the BIR pointer management (609).

If the BIR pointer < 8, the significant bytes of the word which starts at the position given by the DSBR pointer are written in the BIR from the position pointed by the BIR pointer.

If the BIR pointer is greater or equal to 8, the exceeding bytes are written in the BIR from the position zero and the bytes read from the source buffer pointed by the DSBR pointer are written after the last position of the exceeding bytes.

b) At the same time, each time that the first eight bytes of the BIR are filled, they are copied into the target buffer which is a flip flop burst buffer (FFBB) located in the DM, which increments therefore the target buffer address. The transfer of data to the FFBB (117) is controlled by the BIR pointer management.

If all the data of a buffer are read, if the message continues on a next source buffer and the XBR is not filled yet, the DM unchaines the next buffer thanks to the address given in the NBA next buffer address contained in the control block.

All those operations are repeated as many times as necessary to reach the number of bytes requested by the XBR. If the number of bytes remaining in the message is below this value, the operation stops when the message ends, and the DM will save the number of bytes read from the source buffer(s).

Step 4. At the end of the burst process, the DM saves in the control block of the user the information which is required for the processing of the next burst. This enables to interleave the burst processes for different users.

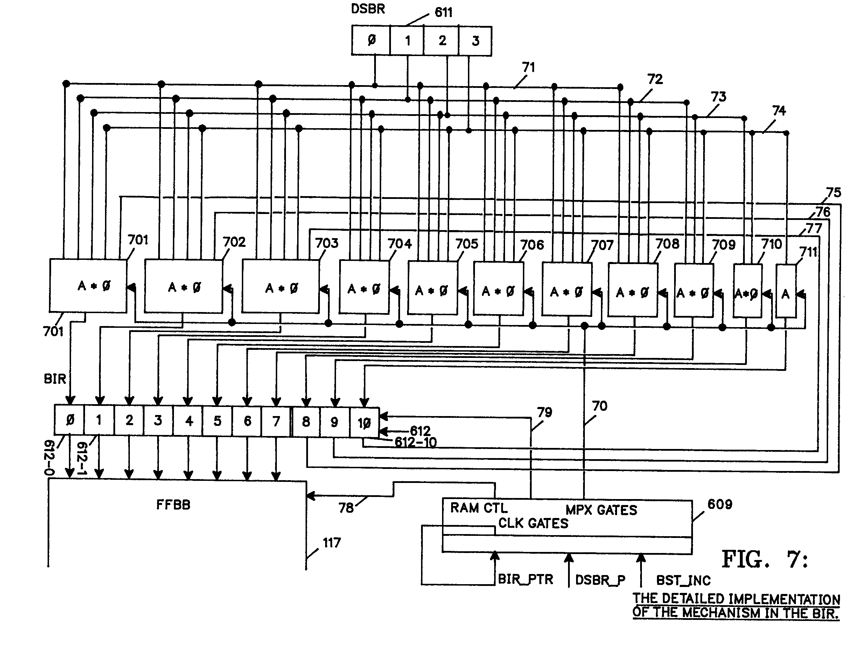

Figure 7 shows the detailed implementation of the mechanism in the BIR according to the present invention.

The DSBR (611) in the data store comprises the four bytes of the source buffer (113). The first byte of the DSBR-0 is connected to the input gates of the first eight multiplexers A*O (701 to 708) through a bus 71, whereas the bus 72, 73, 74 connect respectively the DSBR-1, DSBR-2 and DSBR-3 to the input gates of the first nine (701 to 709), first ten (701 to 710) and all the multiplexers (701 to 711). The bus 75, 76, 77 also connect respectively the input gates of the first three multiplexers (701, 702, 703) to the last three bytes of the BIR (612-8, 612-9, 612-10).

The multiplexers input gates are selected by the BIR pointer management (609) through line 70. Line 79 commands the clock gates of the BIR, and line 78 enables to control the transfer of the first eight bytes of the BIR (612-0 to 612-7) into the FFBB (117).

This part of the description gives the different possibilities which occur for the alignment logic concerning the third position in the BIR (612-2).

| | | 612-2 | | | | | | | | |
|---|---|---|---|---|---|---|---|---|---|---|

| X0 | X1 | X2 | X3 |
|---|---|---|---|

In the third position of the BIR,

```
                    - X0 is written when:
                DSBR_P = 00  and  BIR_PTR = 0010
                            or  BIR_PTR = 1010



        - X1 is written when:
            DSBR_P = 00  and  BIR_PTR = 0001  and  BST_INC = 4 or
      3 or 2
                            or  BIR_PTR = 1001
            DSBR_P = 01  and  BIR_PTR = 0010
                            or  BIR_PTR = 1010


        - X2 is written when:
            DSBR_P = 00  and  BIR_PTR = 0000  and  BST_INC = 4 or
      3
                            or  BIR_PTR = 1000
            DSBR_P = 01  and  BIR_PTR = 0001  and  BST_INC = 3 or
      2
                            or  BIR_PTR = 1001
            DSBR_P = 10  and  BIR_PTR = 0010
                            or  BIR_PTR = 1010


        - X3 is written when:
            DSBR_P = 01  and  BIR_PTR = 0000  and  BST_INC = 3
                            or  BIR_PTR = 1000
            DSBR_P = 10  and  BIR_PTR = 0001  and  BST_INC = 2
                            or  BIR_PTR = 1000
            DSBR_P = 11  and  BIR_PTR = 0010
                            or  BIR_PTR = 1010
```

and the last possibility appears when all the bytes read in the source buffer are written in the BIR and the BIR_PTR = 1011. Therefore, the exceeding three bytes are copied in the first three position of the BIR after the eight bytes are transferred in the target buffer. The byte in the position 612-10 will be copied in the third position of the BIR.

**Claims**

1. A method for accessing a data store (112), for aligning data of a message read from a plurality of source buffers (113), each one being associated to a buffer control block containing information about the buffer contents, said source buffers being chained to each other and organized in $2^n$ bytes words in

9

said data store (112), and for transferring said aligned data to a target buffer (117) organized in $2^m$ bytes words of a data store interface DSI (111) where m is greater than n, said DSI interfaces said data store and adapters (120) to which are attached a plurality of users (122), said method characterized in that it comprises the steps of:

(a) reading at the request of a user (122) the buffer control block (121) of the source buffer associated to said user, said buffer control block indicating at least the beginning, the ending of the message in the source buffer and the address of the next chained source buffer;

(b) detecting in said source buffer the beginning of the data to transmit and its ending which, respectively, do not necessarily start at the first byte position of the word and end at the last byte position of the word of said source buffer;

(c) computing the number of bytes to transmit from said source buffer;

(d) comparing the number of bytes to transmit to the number of bytes requested by the user;

(e) if the number of bytes requested by the user is below the number of bytes of the data to transfer, setting the number of bytes to transfer equal to the number of bytes requested by the user and processing further the data alignment and transfer;

(f) otherwise, transferring the data word by word to a buffer interface register (612), whose size is equal to the target buffer width ($2^m$) plus the source buffer width ($2^n$) minus one, to align them until they match or exceed the size of $2^m$ bytes word of the target buffer;

(g) while transferring the first $2^m$ bytes word of the buffer interface register to the target buffer, looping back the exceeding bytes at the first positions of the buffer interface register;

(h) repeating the alignment and the transfer of the data until the end of the message or the end of the data stored in said source buffer or until the number of bytes requested by the user is reached.

2. The method according to claim 1 characterized in that it further comprises the steps of:

(i) reading the buffer control block (121) of the next source buffer indicated in the buffer control block of the first source buffer;

(j) processing the data alignment and the data transfer until the end of the message or until the number of bytes requested by the user is reached.

3. A memory access control device to be used to access a data store (112), to align data of a message read from a plurality of source buffers (113) chained to each other and organized in $2^n$ bytes words in the said data store (112), and to transfer said aligned data to a target buffer (117) organized in $2^m$ bytes words of a data store interface DSI (111) which interfaces said data store and adapters (120) to which are attached a plurality of users (122), n and m being integer numbers and m greater than n, said device characterized in that it comprises:

- a multiplexing means (610) interfacing the source buffers (113) and the buffer interface means (612) to enable the bytes read from the source buffers to be written in the buffer interface means,

- a buffer interfacing means (612) for aligning the data read from the source buffers (113) and for adapting the size of each byte word to the size of the target buffer (117), said buffer interface means comprising a register having a number of bytes which corresponds to the target buffer width ($2^m$) plus the source buffer width ($2^n$) minus one, in order to implement a mechanism which enables to loop back the exceeding bytes which are from byte positions ($2^m + 1$) to ($2^m + 2^n - 1$), to the beginning of said buffer interface means (612) to which are added the next bytes read from the source buffer, while the first 2 m bytes of the buffer interface means are transferred to the target buffer,

- a pointer management system (608, 609) accessing the data store (112), aligning data of a message read from the source buffers (113) and transferring said aligned data to the buffer interface means (612) before sending them to the target buffer (117).

4. The device according to claim 3 characterized in that the pointer management system (608, 609) comprises:

- means (608) for managing pointers associated to the bytes of the source buffer currently read which indicate the beginning and the ending of the data to transmit from said source buffer,

- means (609) for managing pointers associated to the bytes of the buffer interface means (612) which indicate the position of the next byte to write in and which enables, once at least the first $2^m$ bytes of the buffer interface means are filled, to transfer these first $2^m$ bytes to the target buffer (117) while looping back to its first positions the exceeding bytes which are from positions ($2^m + 1$) to ($2^m + 2^n - 1$), to which are added the next bytes read from the source buffer.

5. The memory access control device according to claims 3 or 4 characterized in that a register (121) is attached to each source buffer to enable the management of the bytes to be transferred, wherein are stored the address of the first not empty byte of the source buffer pointed by a start pointer, the address of the last not empty byte of the source buffer pointed by a stop pointer, and the address of the next source buffer which houses the continuing message used by the data store interface to control the read operation of the source buffers.

6. The memory access control device according to anyone of claims 3 to 5 characterized in that a register (602) is attached to the buffer interfacing means (612) to indicate the address of the first empty byte of said buffer interfacing means pointed by a pointer.

7. The memory access control device according to anyone of claims 3 to 6 characterized in that the target buffer is a flip-flop buffer.

FIG.1

THE ENVIRONMENT OF THE PRESENT INVENTION

FIG.2 : THE PRINCIPLE OF THE TRANSFER AND ALIGNMENT ACCORDING TO THE PRESENT INVENTION.

13

302

XBR (U_ID, BURST_LGTH...)

FIG.3 :

FLOW CHART OF THE BEGINNING OF THE
DATA PROCESSING

READ CB   304

306

MSG
IN PROCESS   N          MIP = Ø   Y   NO MSG
                                        IN PROCESS

310

LOAD BUF_DISP
NBUF_ADD
STOP_BCNT

FROM CBs

307

READ DS BCCB

308

LOAD BUF_DISP
NBUF_ADD
STOP_BCNT

FROM BCCB

312

COMPUTE WRD_NB
IN BUFFER

314

WB_DISP = BUF_DISP(0:5)

316

BUFIRSTAC = 1

BST_BCNT = Ø

DATA PROCESS
(FIG.4)

14

# FIG.4A

## THE MAIN FLOW-CHART OF THE DATA PROCESSING

400 → READ 1
WORD IN WORKING
BUFFER AT ADD = WB_DISP

402 — BUFIRSTAC?

N (left) / Y (right)

404 →
VBCNT_A = 0

DSBR_P = 0

406 →
VBCNT_A = 0//BUF_DISP(6:7)
DSBR_P = BUF_DISP(6:7)
BUFIRSTAC = 0

408 — WRD_NB = 1

N (left) / Y (right)

410 →
VBCNT_B = 4

412 →
VBCNT_B=0//STOP_BCNT(6:7)

414 →
BST_INC = VBCNT_B−VBCNT_A

BST_BCNT = BST_BCNT + BST_INC

416 — BST_BCNT > BURST_LGTH

N (left) / Y (right) OUT_CONDITION

TO STEP 420

418 — BIR_PTR < 8

N / Y

420 →
WRITE IN THE
TARGET BUFFER

BIR_OV = BIR_PTR−8

432 →
BIR(BIR_PTR:BIR_PTR + BST_INC−1) =

DSBR(DSBR_P : DSBR_P + BST_INC−1)

BIR_PTR = BIR_PTR + BST_INC

424 — BIR_OV = 0

N / y

426 →
BIR(0:BIR_OV−1)=BIR(8:8+BIR_OV−1)

BIR(BIR_OV : BIR_OV+BST_INC−1)=

DSBR(DSBR_P : DSBR_P+BST_INC−1

428 →
BIR(0:BST_INC−1) =

DSBR(DSBR_P:DSBR_P+BST_INC−1

430 →
BIR_PTR=BIR_PTR+BST_INC

(A)

15

EP 0 571 683 A1

FIG.4B

(A)

WRD_NB = WRD_NB-1  *434*

WRD_NB = 0  *436*

N → WB-DISP = WB_DISP + 1  *438*

BACK TO STEP 400

Y → NBA : FFFF  *440*

N →

READ NBUF BCCB :

LOAD BUF_DISP
NBUF_ADD
STOP_BCNT

FROM BCCB  *442*

COMPUTE WRD_NB

WB_DISP = BUF_DISP(0:5)

BUFIRSTAC = 1  *444*

BACK TO STEP 400

Y → BURST_CNT = BST_BCNT

LAST_BURST = 1

MIP = 0  *446*

SAVE CBs

WITH CBA = FFFF
NBA = FFFF
MIP = 0  *448*

END

16

DMX OUT CONDITIONS

## FIG.5 :

### THE FLOW-CHART OF THE DATA PROCESSING WHEN THE MECHANISM RUNS OUT OF CONDITIONS.

500

BURST_CNT = BURST_LGTH

502

NEW_OFFSET(0:1) = F(VBCNT_B, BIR_PTR)

504

NEW_OFFSET = 0

N

Y

508

BUF_DISP(0:5) = WB_DISP

506

BUF_DISP(0:5) = WB_DISP+1

510

BUF_DISP(6:7) = NEW_OFFSET

SAVE CBs

END

17

FIG.6

THE IMPLEMENTATION OF THE MECHANISM

FIG. 7: THE DETAILED IMPLEMENTATION OF THE MECHANISM IN THE BIR.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,A | EP-A-0 365 731 (IBM)<br>* column 2, line 50 - column 3, line 44 *<br>* column 30, line 8 - column 30, line 42; figure 22 *<br><br>--- | 1,3 | G06F5/00<br>G06F12/04 |
| A | IBM TECHNICAL DISCLOSURE BULLETIN.<br>vol. 19, no. 5, October 1976, NEW YORK US<br>pages 1892 - 1895<br>Y.DISHON ET AL. 'VARIABLE LENGTH DATA ASSEMBLER'<br>* the whole document *<br><br>----- | 1,3 | |
| | | | TECHNICAL FIELDS SEARCHED (Int. Cl.5 )<br><br>G06F |

The present search report has been drawn up for all claims

| Place of search | Date of completion of the search | Examiner |
|---|---|---|
| THE HAGUE | 08 JANUARY 1993 | KHAZAM U.J. |